# EUROPÄISCHE PATENTANMELDUNG

(11) **EP 1 073 242 A2**
(43) Veröffentlichungstag der Anmeldung: **31.01.2001**
(21) Anmeldenummer: 00116534.9
(22) Anmeldetag: 31.07.2000
(51) Int. Cl.: H04L 29/06, H04Q 11/04

(54) **Verfahren und Anordnung zum Verifizieren einer Verbindung zwischen zwei Kommunikationseinrichtungen**

(30) Priorität: 29.07.1999 DE 19935786
(71) Anmelder: SIEMENS AKTIENGESELLSCHAFT, 80333 München (DE)
(72) Erfinder: Becker, Thomas, 59755 Arnsberg (DE); Schönfeld, Norbert, 44145 Dortmund (DE); Lindemann, Werner, 45473 Mühlheim (DE)

(57) **Zusammenfassung**

Im Rahmen eines Verbindungsaufbaus zwischen einer ersten und einer zweiten Kommunikationseinrichtung (PBX; DV1,...,DVn) werden für eine Datenübermittlung jeweils verbindungsindividuelle Informationen gespeichert. Ausgehend von der zweiten Kommunikationseinrichtung (DV1,..., DVn) wird während der Verbindung jeweils nach Ablauf einer einstellbaren Zeitspanne eine Testnachricht an die erste Kommunikationseinrichtung (PBX) übermittelt. In Fällen, in denen eine protokollgemäße Übermittlung der Testnachricht nicht möglich ist, wird durch die zweite Kommunikationseinrichtung (DV1,...,DVn) erneut eine Verbindung zwischen der ersten und der zweiten Kommunikationseinrichtung (PBX; DV1,...,DVn) aufgebaut und die gespeicherten verbindungsindividuellen Informationen an die erste Kommunikationseinrichtung (PBX) übermittelt.

## Beschreibung

Die Erfindung betrifft ein Verfahren bzw. eine Anordnung zum Verifizieren einer Verbindung zwischen einem sogenannten 'CAPI-Client' (Common ISDN Application Programming Interface) und einem sogenannten 'CAPI-Server'.

Eine Steuerung einer Datenübermittlung ausgehend von einer auf einem Rechner - z.B. einem Personal Computer - ablaufenden Applikation über ein ISDN-Kommunikationsnetz (Integrated Services Digital Network) erfolgt im allgemeinen mittels eines im Rechner integrierten sogenannten CAPI-Treibers. CAPI stellt dabei eine Softwareschnittstelle dar, die einen Zugriff ausgehend von auf einem Rechner ablaufenden Applikationen auf eine den Anschluß an ein ISDN-Kommunikationsnetz realisierende ISDN-Netzanschlußkarte des Rechners erlaubt. Hierfür ist für die CAPI-Schnittstelle ein standardisierter Satz von Befehlen definiert.

Bei einer sogenannten 'Client-Server-Architektur' verfügen die einzelnen als 'Clients' bezeichneten Rechner über keinen direkten Anschluß an das ISDN-Kommunikationsnetz. Der Anschluß an das ISDN-Kommunikationsnetz erfolgt durch eine als 'Server' bezeichnete zentrale Einrichtung, die beispielsweise über ein lokales Netzwerk LAN (Lokal Area Network) mit den Rechnern verbunden ist. Die zentrale Einrichtung kann dabei als Kommunikationsanlage ausgestaltet sein, die sowohl über einen ISDN-Netzanschluß mit dem ISDN-Kommunikationsnetz als auch über einen LAN-Netzanschluß mit dem lokalen Netzwerk LAN verbunden ist. Für eine Datenübermittlung über das ISDN-Kommunikationsnetz ausgehend von einer auf dem Rechner laufenden Applikation werden die von der Applikation ausgegebenen Befehle und die zu übermittelnden Daten über die CAPI-Schnittstelle des Rechners, das lokale Netzwerk LAN und die CAPI-Schnittstelle der zentralen Einrichtung an die zentrale Einrichtung übermittelt, welche eine applikationsindividuelle Verbindung mit dem ISDN-Kommunikationsnetz einrichtet. Im Zusammenhang mit der beschriebenen 'Client-Server-Architektur' wird die CAPI-Schnittstelle häufig als Virtuell CAPI - kurz VCAPI - bezeichnet.

Da die jeweiligen Verbindungen zwischen der zentralen Einrichtung und den Rechnern über das lokale Netzwerk LAN keine daueraktiven Verbindungen darstellen, sind für eine Datenübermittlung zwischen der zentralen Einrichtung und den jeweiligen Rechnern sowohl in der zentralen Einrichtung als auch in den Rechnern verbindungsindividuelle Informationen gespeichert. Die verbindungsindividuellen Informationen in der zentralen Einrichtung umfassen dabei im wesentlichen die IP-Adressen (Internet Protokoll) der an der zentralen Einrichtung angemeldeten Rechner. In den Rechnern ist im wesentlichen die IP-Adresse der zentralen Einrichtung hinterlegt. Bei einem Neustart - in der Literatur häufig als 'Reset' bezeichnet - oder bei einem Stromausfall in der zentralen Einrichtung gehen die verbindungsindividuellen Informationen in dieser verloren, so daß es zu einem Verlust der logischen Verbindung zwischen der zentralen Einrichtung und dem Rechner kommt. Der Verbindungsverlust wird durch den Rechner, bzw. durch einen Benutzer des Rechners, in der Regel erst infolge eines neuen Zugriffs des Rechners auf die zentrale Einrichtung registriert. Die Zeitspanne zwischen zwei Zugriffen des Rechners auf die zentrale Einrichtung kann hierbei jedoch beliebig lang sein.

Die in der Zeitspanne zwischen Verbindungsverlust und Erkennen des Verbindungsverlustes für den Benutzer über das ISDN-Kommunikationsnetz an der zentralen Einrichtung empfangenen Nachrichten werden durch die zentrale Einrichtung in der Regel verworfen, da der Benutzer während dieser Zeitspanne an der zentralen Einrichtung nicht bekannt ist.

Der vorliegenden Erfindung liegt die Aufgabe zugrunde, Maßnahmen vorzusehen, durch welche ein Verlust von Nachrichten vermieden werden kann.

Die Lösung dieser Aufgabe erfolgt erfindungsgemäß mit den Merkmalen des Patentanspruchs 1 bzw. 7.

Ein wesentlicher Vorteil des erfindungsgemäßen Verfahrens bzw. der erfindungsgemäßen Anordnung besteht darin, daß ein Ausfall der zentralen Einrichtung automatisch und ohne einen Benutzerzugriff innerhalb einer vom Benutzer konfigurierbaren Zeitspanne durch die dezentrale Einrichtung eigenständig erkannt und eine neue Verbindung aufgebaut wird, so daß die Wahrscheinlichkeit für einen Verlust von Nachrichten reduziert werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine zusätzliche Speicherung von dienstespezifischen Applikationsinformationen über die auf der dezentralen Einrichtung ablaufenden, einen Zugriff auf die zentrale Einrichtung steuernden Applikationen auch bei einem - z.B. aufgrund eines Neustarts oder eines Stromausfalls erfolgten - Verlust dieser dienstespezifischen Applikationsinformationen in der zentralen Einrichtung ein erneutes Einrichten der Verbindung mit der zuvor bestehenden verbindungsindividuellen Konfiguration ausgehend von den dezentralen Einrichtungen auf einfache Weise möglich ist.

Ein weiterer Vorteil von in den Unteransprüchen definierten Ausgestaltungen der Erfindung besteht darin, daß eine Nachrichtenübermittlung über das die zentrale und die dezentrale Einrichtung verbindende lokale Netzwerk auf Basis des TCP/IP-Protokolls erfolgt, so daß für eine Überprüfung der Verbindung zwischen zentraler und dezentraler Einrichtung eine standardmäßig nach einem Absenden einer Nachricht empfangene, den Übermittlungsstatus der übermittelten Nachricht anzeigende TCP/IP-Quittung verwendet werden kann, wodurch für ein Erkennen eines Verlusts der logischen Verbindung zwischen zentraler und dezentraler Einrichtung keine zusätzlichen Maßnahmen erforderlich sind.

Ein Ausführungsbeispiel der Erfindung wird im folgenden anhand der Zeichnung näher erläutert.

Dabei zeigen:
- Fig. 1:: ein Strukturbild zur Veranschaulichung der an der Erfindung beteiligten wesentlichen Funktionseinheiten;
- Fig. 2:: ein Ablaufdiagramm zur Veranschaulichung der beim erfindungsgemäßen Verfahren ablaufenden wesentlichen Verfahrensschritte.

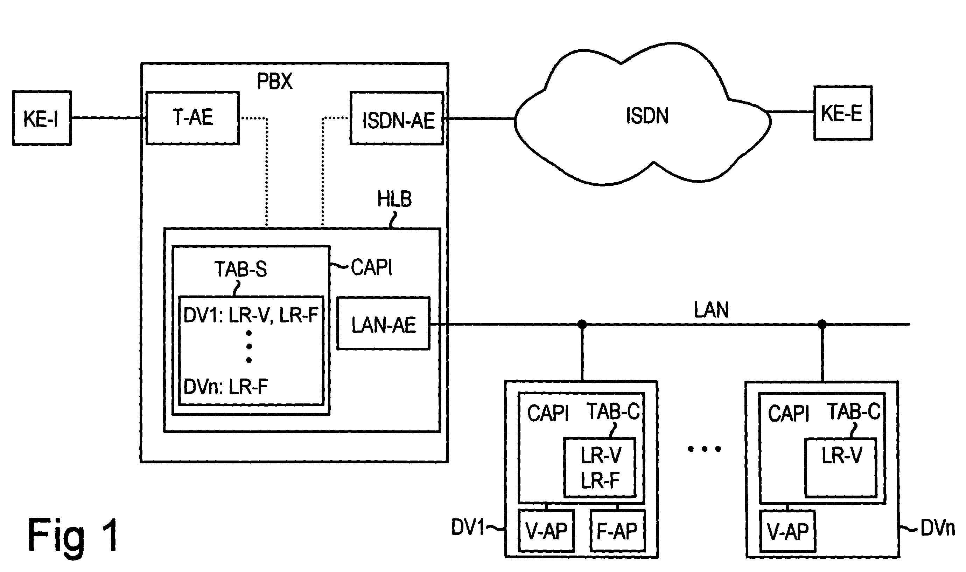

Fig. 1 zeigt eine schematische Darstellung einer Kommunikationsanlage PBX, die über eine ISDN-Netzanschlußeinheit ISDN-AE mit einem ISDN-Kommunikationsnetz ISDN verbunden ist. Ein Anschluß des ISDN-Kommunikationsnetzes ISDN an die Kommunikationsanlage PBX erfolgt beispielsweise mittels einer standardisierten S₀- oder S_{2M}-Schnittstelle. An das ISDN-Kommunikationsnetz ISDN ist beispielhaft ein externes Kommunikationsendgerät KE-E angeschlossen. Des weiteren sind über Teilnehmer-Anschlußeinheiten interne Kommunikationsendgeräte an die Kommunikationsanlage PBX angeschlossen. Beispielhaft ist eine Teilnehmer-Anschlußeinheit T-AE mit einem angeschlossenen internen Kommunikationsendgerät KE-I dargestellt. Beispiele für interne bzw. externe Kommunikationsendgeräte KE-I, KE-E sind Telefone, Facsimile-Geräte oder Datenverarbeitungseinrichtungen, wie z.B. ein 'Personal Computer' oder eine 'Workstation'.

Des weiteren ist die Kommunikationsanlage PBX über eine LAN-Anschlußeinheit LAN-AE mit einem lokalen Netzwerk LAN verbunden. Die LAN-Anschlußeinheit LAN-AE ist auf einer LAN-Anschlußbaugruppe HLB der Kommunikationsanlage PBX angeordnet. Durch die LAN-Anschlußbaugruppe HLB erfolgt im Rahmen einer Datenübermittlung eine bidirektionale Umwandlung zwischen dem Datenformat des lokalen Netzwerks LAN und dem kommunikationsanlagen-internen Datenformat, z.B. dem PCM-Datenformat. Beispiele für ein lokales Netzwerk LAN sind das 'Ethernet', der 'Token Ring' oder der 'Token Bus'. Über das lokale Netzwerk LAN sind Datenverarbeitungseinrichtungen DV1,...,DVn mit der Kommunikationsanlage PBX verbunden. Auf den Datenverarbeitungseinrichtungen DV1,...,DVn laufen jeweils unterschiedliche, eine Datenübermittlung über die Kommunikationsanlage PBX realisierende Applikationen AP. Beispielhaft sind für eine erste Datenverarbeitungseinrichtung DV1 eine digitale Sprachdaten ('voice') verarbeitende - d.h. übermittelnde und empfangende - Applikation V-AP und eine Facsimiledaten verarbeitende Applikation F-AP dargestellt. Des weiteren ist für eine n-te Datenverarbeitungseinrichtung DVn eine weitere digitale Sprachdaten verarbeitende Applikation V-AP dargestellt.

Eine Steuerung der Datenübermittlung über die Kommunikationsanlage PBX erfolgt auf den Datenverarbeitungseinrichtungen DV1,...,DVn durch eine jeweils in den Datenverarbeitungseinrichtungen DV1,...,DVn integrierte, dezentrale CAPI-(Common ISDN Application Programming Interface)-Einrichtung CAPI. Eine derartige dezentrale, auf einer Datenverarbeitungseinrichtung DV1,...,DVn ablaufende CAPI-Einrichtung CAPI wird in der Literatur häufig als 'VCAPI-Client' bezeichnet. Durch die dezentrale CAPI-Einrichtung CAPI werden die für eine Übermittlung von Daten - z.B. von digitalen Sprachdaten, von Facsimiledaten, usw. - zwischen der Datenverarbeitungseinrichtung DV1,...,DVn und einem internen Kommunikationsendgerät KE-I oder einem externen Kommunikationsendgerät KE-E zu übermittelnden Nachrichten über das lokale Netzwerk LAN an die LAN-Anschlußbaugruppe HLB der Kommunikationsanlage PBX übermittelt. Die Nachrichten können dabei Steuerinformationen für die Realisierung einer Datenübermittlung bzw. die zu übermittelnden Daten selbst enthalten.

Als Gegenstück zu den dezentralen CAPI-Eirichtungen CAPI der Datenverarbeitungseinrichtungen DV1,...,DVn weist die LAN-Anschlußbaugruppe HLB der Kommunikationsanlage eine zentrale, den dezentralen CAPI-Einrichtungen zugeordnete CAPI-Einrichtung CAPI auf. Eine auf einer zentralen Einrichtung ablaufende CAPI-Einrichtung CAPI wird in der Literatur dabei häufig als 'VCAPI-Server' bezeichnet. Die Architektur bestehend aus einer zentralen CAPI-Einrichtung CAPI und mehreren dezentralen CAPI-Einrichtungen CAPI wird in der Literatur als 'VCAPI-Client-Server-Architektur' bezeichnet. Anhand der von den Datenverarbeitungseinrichtungen DV1,...,DVn übermittelten Steuerinformationen wird durch die zentrale CAPI-Einrichtung CAPI eine Übermittlung der zu übermittelnden Daten über die Kommunikationsanlage PBX gesteuert. Hierbei wird die Kommunikationsanlage PBX durch die zentrale CAPI-Einrichtung CAPI je nach Kommunikationsziel für eine Weiterleitung der zu übermittelnden Daten an eine Teilnehmer-Anschlußeinheit T-AE - bei einer Datenübermittlung an das interne Kommunikationsendgerät KE-I - oder an die ISDN-Netzanschlußeinheit ISDN-AE - bei einer Datenübermittlung an das externe Kommunikationsendgerät KE-E - eingestellt. Eine kommunikationsanlagen-intere Übermittlung der Daten erfolgt dabei über mehrere - nicht dargestellte - Einrichtungen der Kommunikationsanlage PBX, wie z.B. ein Koppelfeld. Durch die gepunktete Verbindungslinie zwischen der LAN-Anschlußbaugruppe HLB und der Teilnehmer-Anschlußeinheit T-AE bzw. der LAN-Anschlußbaugruppe HLB und der ISDN-Netzanschlußeinheit ISDN-AE wird verdeutlicht, daß keine direkten Verbindungen zwischen diesen Einheiten der Kommunikationsanlage PBX bestehen.

Eine Übermittlung der Nachrichten zwischen einer Datenverarbeitungseinrichtung DV1,...,DVn und der Kommunikationsanlage PBX bzw. zwischen den Datenverarbeitungseinrichtungen DV1,...,DVn untereinander über das lokale Netzwerk LAN erfolgt auf Basis des bekannten Übertragungsprotokolls TCP/IP (Transmission Control Protocol / Internet Protocol). Eine Übermittlung von zeitkritischen Daten, wie z.B. Sprachdaten, wird auf Basis des bekannten Übertragungsprotokolls H.323 realisiert.

Für eine Steuerung der Datenübermittlung zwischen den jeweiligen an der Kommunikationsanlage angemeldeten Datenverarbeitungseinrichtungen DV1,...,DVn und der Kommunikationsanlage PBX ist sowohl in der zentralen CAPI-Einrichtung CAPI eine zentrale Tabelle TAB-S als auch in den dezentralen CAPI-Einrichtungen CAPI jeweils eine datenverarbeitungseinrichtungsindividuelle Tabelle TAB-C eingerichtet. Die datenverarbeitungseinrichtungs-individuellen Tabellen TAB-C enthalten jeweils dienstespezifischen Applikationsinformationen LR über die Dienstearten - z.B. Sprachdienste, Facsimiledienste, usw. - welche durch die auf der entsprechenden Datenverarbeitungseinrichtung DV1,...,DVn ablaufenden, eine Datenübermittlung über die Kommunikationsanlage PBX realisierenden Applikationen AP unterstützt werden. So ist in der datenverarbeitungsindividuellen Tabelle TAB-C der ersten Datenverarbeitungseinrichtung eine dienstespezifische Applikationsinformation LR-V für die digitale Sprachdaten verarbeitende Applikation V-AP und eine dienstespezifische Applikationsinformation LR-F für die Facsimiledaten verarbeitende Applikation F-AP hinterlegt. Analog ist in der datenverarbeitungsindividuellen Tabelle TAB-C der n-ten Datenverarbeitungseinrichtung eine dienstespezifische Applikationsinformation LR-V für die auf dieser Datenverarbeitungseinrichtung DVn ablaufenden, digitale Sprachdaten verarbeitende Applikation V-AP hinterlegt. In der zentralen Tabelle TAB-S der zentralen CAPI-Einrichtung CAPI sind analog zu den datenverarbeitungseinrichtungs-individuellen Tabellen TAB-C dienstespezifische Applikationsinformationen LR über die auf den jeweiligen, an der Kommunikationsanlage PBX angemeldeten Datenverarbeitungseinrichtungen DV1,...,DVn laufenden, eine Datenübermittlung über die Kommunikationsanlage PBX realisierenden Applikationen AP gespeichert. Zusätzlich zu den dienstespezifischen Applikationsinformationen LR sind in den Tabellen TAB-S, TAB-C für eine Datenübermittlung über das lokale Netzwerk LAN notwendige - nicht dargestellte - Adreßinformationen, z.B. die IP-Adressen der jeweiligen, für eine Datenübermittlung vorgesehenen Einrichtungen, gespeichert.

Empfängt die Kommunikationsanlage PBX Daten für eine an der Kommunikationsanlage PBX angemeldete Datenverarbeitungseinrichtung DV1,...,DVn wird überprüft, welcher Diensteart - z.B. digitale Sprachdaten, Facsimiledaten, usw. - die empfangenen Daten zugeordnet sind. Anschließend wird anhand der für die adressierte Datenverarbeitungseinrichtung DV1,...,DVn in der zentralen Tabelle TAB-S gespeicherten dienstespezifischen Applikationsinformationen LR überprüft, ob die adressierte Datenverarbeitungseinrichtung DV1,...,DVn für eine Verarbeitung der empfangenen Daten ausgestaltet ist, d.h. ob eine entsprechende, die empfangenen Daten verarbeitende Applikation AP auf der Datenverarbeitungseinrichtung DV1,...,DVn aktuell gestartet ist. Ist dies der Fall, werden die Daten mittels der in der zentralen Tabelle TAB-S gespeicherten Adreßinformation über das lokale Netzwerk LAN an die adressierte Datenverarbeitungseinrichtung DV1,...,DVn übermittelt.

Kommt es nun beispielsweise im Rahmen eines Neustarts der Kommunikationsanlage PBX oder aufgrund eines Stromausfalls der LAN-Anschlußbaugruppe HLB bzw. der Kommunikationsanlage PBX zu einem Verlust der dienstespezifischen Applikationsinformationen LR und der Adreßinformationen in der zentralen CAPI-Einrichtung, d.h. zu einem Verlust der logischen Verbindung zwischen Kommunikationsanlage PBX und den Datenverarbeitungseinrichtungen DV1,...,DVn, ist eine Datenübermittlung zwischen der Kommunikationsanlage PBX und den Datenverarbeitungseinrichtungen DV1,...,DVn nicht mehr möglich. Da die auf den Datenverarbeitungseinrichtungen DV1,...,DVn gestarteten Applikationen AP weiterhin ordnungsgemäß ablaufen, geht ein Benutzer einer Datenverarbeitungseinrichtung DV1,...,DVn davon aus, daß an der Kommunikationsanlage PBX für ihn empfangene Daten korrekt weitergeleitet werden. Der Verlust der logischen Verbindung zwischen der Kommunikationsanlage PBX und der Datenverarbeitungseinrichtung DV1,...,DVn wird durch den Benutzer in der Regel erst infolge eines neuen, nicht mehr möglichen Zugriffs der dezentralen CAPI-Einrichtung CAPI auf die zentrale CAPI-Einrichtung CAPI bemerkt. Die in der Zeitspanne zwischen Neustart bzw. Stromausfall und Erkennen des Verlusts der logischen Verbindung durch die dezentrale CAPI-Einrichtung der jeweiligen Datenverarbeitungseinrichtung DV1,...,DVn für den Benutzer an der Kommunikationsanlage PBX empfangenen Daten sind für den Benutzer jedoch nicht mehr verfügbar, da sie in der Regel von der Kommunikationsanlage PBX als nicht zustellbar verworfen wurden.

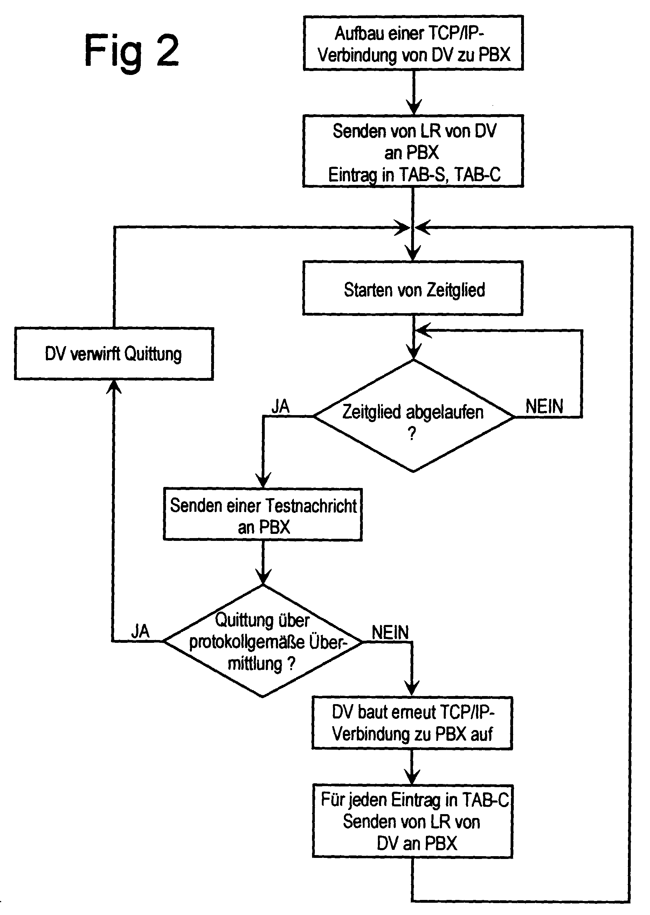

Fig. 2 zeigt ein Ablaufdiagramm zur Veranschaulichung der beim erfindungsgemäßen Verfahren ablaufenden wesentlichen Verfahrensschritte, durch welches das oben beschriebene Problem auf einfache Weise umgangen werden kann.

Nach einem - im Rahmen einer Anmeldung einer Datenverarbeitungseinrichtung DV1,...,DVn an der Kommunikationsanlage PBX erfolgenden - Aufbau einer TCP/IP-Verbindung zwischen der Datenverarbeitungseinrichtung DV1,...,DVn und der Kommunikationsanlage PBX werden durch die dezentrale CAPI-Einrichtung CAPI der Datenverarbeitungseinrichtung DV1,...,DVn den auf der Datenverarbeitungseinrichtung DV1,...,DVn laufenden Applikationen AP entsprechende ^{'}Listen-Request'-Meldungen an die zentrale CAPI-Einrichtung CAPI übermittelt. Zusätzlich werden durch die dezentrale CAPI-Einrichtung CAPI entsprechende dienstespezifische Applikationsinformationen LR in der datenverarbeitungseinrichtungs-individuellen Tabelle TAB-C gespeichert. Im vorliegenden Ausführungsbeispiel werden durch die dezentrale CAPI-Einrichtung CAPI der ersten Datenverarbeitungseinrichtung DV1 zwei 'Listen-Request'-Meldungen an die zentrale CAPI-Einrichtung CAPI übermittelt, die signalisieren, daß auf der ersten Datenverarbeitungseinrichtung DV1 eine digitale Sprachdaten verarbeitende Applikation V-AP und eine Facsimiledaten verarbeitende Applikation F-AP gestartet wurden. Zusätzlich werden dienstespezifische Applikationsinformationen LR-V, LR-F in der datenverarbeitungseinrichtungsindividuellen Tabelle TAB-C hinterlegt. Durch die zentrale CAPI-Einrichtung CAPI der Kommunikationsanlage PBX werden bei Empfang einer 'Listen-Request'-Meldung eine der 'Listen-Request'-Meldung entsprechende dienstespezifische Applikationsinformation LR in der zentralen Tabelle TAB-S der LAN-Anschlußbaugruppe HLB gespeichert. Im vorliegenden Ausführungsbeispiel werden in der zentralen Tabelle TAB-S für die erste Datenverarbeitungseinrichtung DV1 dienstespezifische Applikationsinformationen LR-V und LR-F hinterlegt.

In einem nächsten Schritt wird durch die dezentrale CAPI-Einrichtung CAPI der Datenverarbeitungseinrichtung DV1,...,DVn ein individuell konfigurierbares Zeitglied gestartet. Nach Ablauf dieses Zeitglieds sendet die dezentrale CAPI-Einrichtung CAPI der Datenverarbeitungseinrichtung DV1,...,DVn eine Testnachricht an die zentrale CAPI-Einrichtung CAPI der Kommunikationsanlage PBX. Eine derartige Testnachricht wird durch die zentrale CAPI-Einrichtung CAPI bei Empfang sofort verworfen ohne die Testnachricht zu interpretieren oder zu beantworten. Eine Bewertung der verbindung zwischen Datenverarbeitungseinrichtung DV1,...,DVn und Kommunikationsanlage PBX erfolgt anhand einer standardmäßig durch das TCP/IP-Protokoll an die sendende Einrichtung - im vorliegenden Ausführungsbeispiel an die dezentrale CAPI-Einrichtung CAPI - übermittelten Quittungsnachricht, die den Status der Übermittlung einer übermittelten Nachricht bezeichnet. In Fällen in denen die Datenverarbeitungseinrichtung DV1,...,DVn eine Quittungsmeldung über eine protokollgemäße, d.h. korrekte Übermittlung der Testnachricht an die Kommunikationsanlage PBX erhält, verwirft die Datenverarbeitungseinrichtung DV1,...,DVn die Quittungsmeldung und startet das Zeitglied neu.

Bei Empfang einer Quittungsmeldung über eine nicht protokollgemäße Übermittlung der Testnachricht geht die dezentrale CAPI-Einrichtung CAPI der Datenverarbeitungseinrichtung DV1,...,DVn davon aus, daß die logische Verbindung zwischen Kommunikationsanlage PBX und Datenverarbeitungseinrichtung DV1,..., DVn, z.B. aufgrund eines Neustarts oder eines Stromausfalls in der Kommunikationsanlage PBX unterbrochen ist. Von einer nicht protokollgemäßen Übermittlung der Testnachricht wird beispielsweise in Fällen ausgegangen, in denen keine Quittungsmeldung, eine nicht interpretierbare Quittungsmeldung oder eine negative, d.h. eine Übermittlung der Testnachricht innerhalb einer vorgegebenen Zeitspanne ist nicht möglich Quittungsmeldung empfangen wird. Die dezentrale CAPI-Einrichtung CAPI der Datenverarbeitungseinrichtung DV1,..., DVn baut daraufhin erneut eine TCP/IP-Verbindung zwischen der Kommunikationsanlage PBX und der Datenverarbeitungseinrichtung DV1,...,DVn auf. Nach dem erneuten Aufbau der TCP/IP-Verbindung übermittelt die dezentrale CAPI-Einrichtung CAPI der Datenverarbeitungseinrichtung DV1,...,DVn anhand der in der datenverarbeitungseinrichtungs-individuellen Tabelle TAB-C gespeicherten dienstespezifischen Applikationsinformationen LR entsprechende 'Listen-Request'-Meldungen an die Kommunikationsanlage PBX. Die zentrale CAPI-Einrichtung CAPI der Kommunikationsanlage PBX speichert den empfangenen 'Listen-Request'-Meldungen entsprechende dienstespezifische Applikationsinformationen LR in der zentralen Tabelle TAB-S, so daß die neue TCP/IP-Verbindung zwischen Kommunikationsanlage PBX und Datenverarbeitungseinrichtung DV1,..., DVn in der ursprünglichen Konfiguration eingerichtet ist. Abschließend startet die dezentrale CAPI-Einrichtung CAPI der Datenverarbeitungseinrichtung DV1,...,DVn erneut das Zeitglied, so daß eine Überwachung des Zustands der zentralen CAPI-Einrichtung CAPI durch die dezentrale CAPI-Einrichtung CAPI sichergestellt ist.

Alternativ zur Kommunikationsanlage PBX kann die zentrale CAPI-Einrichtung CAPI in einem Zentralrechner - in der Literatur als 'Server' bezeichnet - des lokalen Netzwerks LAN angeordnet sein. Durch den Zentralrechner erfolgt dabei ein Zugang zum ISDN-Kommunikationsnetz ISDN und für eine Datenübermittlung eine bidirektionale Umwandlung zwischen dem Datenformat des lokalen Netzwerks LAN und dem Datenformat des ISDN-Kommunikationsnetzes ISDN.

## Patentansprüche

1. Verfahren zum Verifizieren einer Verbindung zwischen einer ersten und einer zweiten, über ein lokales Netzwerk (LAN) miteinander verbunden Kommunikationseinrichtung (PBX; DV1,...,DVn),
bei dem im Rahmen eines Verbindungsaufbaus in der ersten und in der zweiten Kommunikationseinrichtung (PBX; DV1,...,DVn) jeweils verbindungsindividuelle Informationen gespeichert werden,
bei dem während der Verbindung jeweils nach Ablauf einer einstellbaren Zeitspanne eine Testnachricht von der zweiten Kommunikationseinrichtung (DV1,...,DVn) an die erste Kommunikationseinrichtung (PBX) übermittelt wird, und
bei dem in Fällen, in denen eine protokollgemäße Übermittlung der Testnachricht nicht möglich ist, durch die zweite Kommunikationseinrichtung (DV1,...,DVn) erneut eine Verbindung zwischen der ersten und der zweiten Kommunikationseinrichtung (PBX; DV1,...,DVn) aufgebaut und die gespeicherten verbindungsindividuellen Informationen an die erste Kommunikationseinrichtung (PBX) übermittelt werden.

2. Verfahren nach Anspruch 1,
**dadurch gekennzeichnet,**
daß der Verbindungsaufbau durch eine jeweils in der ersten und der zweiten Kommunikationseinrichtung (PBX, DV1,..., DVn) angeordnete CAPI-Einheit (CAPI: Common ISDN Application Programming Interface) gesteuert wird.

3. Verfahren nach Anspruch 2,
**dadurch gekennzeichnet,**
daß die in der ersten und in der zweiten Kommunikationseinrichtung (PBX, DV1,...,DVn) gespeicherten verbindungsindividuellen Informationen dienstespezifische Applikationsinformationen (LR) über die auf der zweiten Kommunikationseinrichtung (DV1, ...,DVn) ablaufenden, auf die CAPI-Einheit (CAPI) zugreifenden Applikationen (V-AP, F-AP) umfassen.

4. Verfahren nach Anspruch 3,
**dadurch gekennzeichnet,**
daß an der ersten Kommunikationseinrichtung (PBX) empfangene und an die zweite Kommunikationseinrichtung (DV1, ...,DVn) adressierte Daten in Abhängigkeit von den in der ersten Kommunikationseinrichtung (PBX) gespeicherten dienstespezifischen Applikationsinformationen (LR) an die zweite Kommunikationseinrichtung (DV1,...,DVn) weiterübermittelt werden.

5. Verfahren nach einem der vorhergehenden Ansprüche,
**dadurch gekennzeichnet,**
daß die zu übermittelnden Daten digitale Sprachdaten, Facsimile-Daten oder Rechner-Daten sind.

6. Verfahren nach einem der vorhergehenden Ansprüche,
**dadurch gekennzeichnet,**
daß eine Datenübermittlung über das lokale Netzwerk (LAN) auf Basis des TCP/IP-Protokolls (Transmission Control Protocol / Internet Protocol) erfolgt.

7. Verfahren nach Anspruch 6,
**dadurch gekennzeichnet,**
daß eine Entscheidung über eine protokollgemäße Übermittlung der Testnachricht anhand einer an der zweiten Kommunikationseinrichtung (DV1,...,DVn) empfangenen Quittungsmeldung des TCP/IP-Protokolls getroffen wird.

8. Anordnung zum Verifizieren einer Verbindung zwischen einer ersten und einer zweiten, über ein lokales Netzwerk (LAN) miteinander verbunden Kommunikationseinrichtung (PBX; DV1,...,DVn),
mit jeweils einer Speichereinrichtung (TAB-S, TAB-C) in der ersten und in der zweiten Kommunikationseinrichtung (PBX; DV1,...,DVn) zur Speicherung von verbindungsindividuellen Informationen,
mit einer in der zweiten Kommunikationseinrichtung (DV1,..., DVn) angeordneten Steuereinheit (CAPI),
- die während der Verbindung jeweils nach Ablauf einer einstellbaren Zeitspanne eine Testnachricht an die erste Kommunikationseinrichtung (PBX) übermittelt, und
- die in Fällen, in denen eine protokollgemäße Übermittlung der Testnachricht nicht möglich ist erneut eine Verbindung zwischen der ersten und der zweiten Kommunikationseinrichtung (PBX; DV1,...,DVn) aufgebaut und die gespeicherten verbindungsindividuellen Informationen an die erste Kommunikationseinrichtung (PBX) übermittelt.

9. Anordnung nach Anspruch 8,
**dadurch gekennzeichnet,**
daß die erste und die zweite Kommunikationseinrichtung (PBX, DV1,...,DVn) jeweils eine CAPI-Einheit (CAPI: Common ISDN Appiication Programming Interface) zur Steuerung des Verbindungsaufbaus und der Datenübermittlung zwischen der ersten und der zweiten Kommunikationseinrichtung (PBX, DV1,..., DVn) aufweisen.

10. Anordnung nach Anspruch 8 oder 9,
**dadurch gekennzeichnet,**
daß die CAPI-Einheit (CAPI) der ersten Kommunikationseinrichtung (PBX) in eine den Anschluß der ersten Kommunikationseinrichtung (PBX) an das lokale Netzwerk (LAN) realisierende LAN-Anschlußbaugruppe (HLB) integriert ist.

11. Anordnung nach einem der Ansprüche 8 bis 10,
**dadurch gekennzeichnet,**
daß die erste Kommunikationseinrichtung (PBX) eine Kommunikationsanlage und die zweite Kommunikationseinrichtung (DV1, ...,DVn) eine Datenverarbeitungseinrichtung ist.

12. Anordnung nach einem der Ansprüche 8 bis 11,
**dadurch gekennzeichnet,**
daß das lokale Netzwerk (LAN) ein 'Ethernet', ein 'Token Ring' oder ein 'Token Bus' ist.
